# EUROPÄISCHE PATENTANMELDUNG

(11) **EP 4 836 441 A1**
(43) Veröffentlichungstag der Anmeldung: **04.11.2026**
(21) Anmeldenummer: 26162512.3
(22) Anmeldetag: 05.03.2026
(51) Int. Cl.: H04R 1/1025, H01R 13/62, H04R 25/00

(54) **LADESTELLE FÜR EIN ELEKTRISCHES GERÄT**

(30) Priorität: 29.04.2025 DE 102025116425
(71) Anmelder: Sivantos Pte. Ltd., Singapore 539775 (SG)
(72) Erfinder: Von Mansberg, Thilo, 91058 Erlangen (DE)
(74) Vertreter: FDST Patentanwälte

(57) **Zusammenfassung**

Es wird eine Ladeschnittstelle (18) für ein elektrisches Gerät (4), insbesondere für ein Hörgerät, aufweisend einen Gehäuseabschnitt (20) mit einer zentralen ersten Durchführöffnung (40) und mit mindestens einer hierzu radial versetzten zweiten Durchführöffnung (42), ein Kontaktstück (34) zur Kontaktierung eines ersten Gegenkontakts (24) einer Gegenladeschnittstelle (22), welches in der ersten Durchführöffnung (40) einsitzt, ein Kontaktelement (38) mit mindestens einem Kontaktfortsatz (36) zur Kontaktierung eines zweiten Gegenkontakts (26) der Gegenladeschnittstelle (22), welcher in der zweiten Durchführöffnung (42) einsitzt, ein permanentmagnetisches Magnetelement (46), welches axial fluchtend zu dem zentralen Kontaktstück (34) angeordnet ist, wobei das Kontaktelement (38) aus einem magnetisierbaren Material hergestellt ist, und von dem Magnetelement (46) derart magnetisiert ist, dass der Kontaktfortsatz (36) als Magnetpol zur magnetischen Anziehung der Gegenladeschnittstelle (22) wirkt, angegeben. Weiterhin wird ein Ladesystem (2) und ein elektrisches Gerät (4) angegeben.

## Beschreibung

Die Erfindung betrifft eine Ladeschnittstelle für ein elektrisches Gerät, insbesondere für ein Hörgerät. Die Erfindung betrifft weiterhin ein elektrisches Gerät und ein Ladesystem aufweisend das elektrische Gerät und ein Ladegerät.

Hörhilfegeräte sind tragbare Hörgeräte, die insbesondere zur Versorgung von Schwerhörenden oder Hörgeschädigten dienen. Um den zahlreichen individuellen Bedürfnissen entgegenzukommen, werden unterschiedliche Bauformen von Hörhilfegeräten wie Hinter-dem-Ohr-Hörgeräte (HdO) und Hörgeräte mit einem externen Hörer (RIC: receiver in the canal) sowie In-dem-Ohr-Hörgeräte (IdO, ITE), zum Beispiel auch Concha-Hörgeräte oder Kanal-Hörgeräte (CIC: Completely-In-Channel, IIC: Invisible-In-The-Channel), bereitgestellt.

Die beispielhaft aufgeführten Hörgeräte werden am Außenohr oder im Gehörgang eines Hörhilfegerätenutzers getragen. Darüber hinaus stehen auf dem Markt aber auch Knochenleitungshörhilfen, implantierbare oder vibrotaktile Hörhilfen zur Verfügung. Dabei erfolgt die Stimulation des geschädigten Gehörs entweder mechanisch oder elektrisch. Derartige Hörgeräte besitzen prinzipiell als wesentliche (Hörgeräte-)Komponenten einen Eingangswandler, einen Verstärker und einen Ausgangswandler. Der Eingangswandler ist in der Regel ein akusto-elektrischer Wandler, wie beispielsweise ein Mikrofon. Der Ausgangswandler ist meist als ein elektro-akustischer Wandler, zum Beispiel als ein Miniaturlautsprecher (Hörer), oder als ein elektromechanischer Wandler, wie beispielsweise ein Knochenleitungshörer, realisiert. Der Verstärker ist üblicherweise in eine Signalverarbeitungseinheit integriert.

Hörgeräte werden in der Regel mit Batterien betrieben. Die Betriebsdauer ist je nach Energieinhalt der Batterien und den Anforderungen des Hörgeräts begrenzt. In Anbetracht des allgemeinen Trends zur Miniaturisierung werden Batterien mit geringer Größe bevorzugt, was ihren Energiegehalt zusätzlich begrenzt. Um den häufigen Austausch verbrauchter Batterien zu vermeiden, können Hörgeräte mit wiederaufladbaren Batterien (Akkumulatoren) wie Nickel-Metallhydrid- (NiMH) oder Lithium-Ionen- (Li-Ion) Batterien betrieben werden.

Hörgeräte, die mit wiederaufladbaren Batterien betrieben werden, weisen häufig Ladeschnittstellen (Ladeanschlüsse) auf, um eine elektrische Kontaktierung mit einem galvanischen Ladegerät herzustellen, und somit beim Aufladen der wiederaufladbaren Batterien diese innerhalb des Hörgeräts belassen zu können. Häufig kommen dabei proprietäre Ladeschnittstellen zum Einsatz. Aus dem Mobiltelefon-Bereich ist es allerdings zwischenzeitlich bekannt, dass eine Vielzahl von Anbietern auf Standard-Systeme zurückgreifen. Teilweise kommen bei Geräten mit wiederaufladbaren Batterien auch sogenannte Klinkenstecker zum Einsatz. Diese Systeme haben dabei häufig den Nachteil, dass die zur Herstellung der Kontaktierung erforderlichen Einsteck-Wege meist vergleichsweise lang sind und dadurch ein möglichst "blindes" Finden und einfaches Verbinden der korrespondierenden Anschlüsse insbesondere in Ladeschalen aufweisenden Ladegeräten erschwert ist. Oftmals kommen deshalb in diesem Bereich vergleichsweise flach bauende Federkontakte (Pogo-Pin) zum Einsatz. Letzteres ist beispielsweise aus dem Bereich von kabellosen Festnetztelefonen bekannt.

Um während eines Ladevorgangs, bei welchem die Batterie, mittels eines Ladestroms eines Ladegeräts aufgeladen wird, eine sichere galvanische Verbindung zwischen dem Hörgerät und dem Ladegerät sicherzustellen, ist es beispielsweise möglich, die elektrische Kontaktierung mit einer Haltekraft zu sichern.

Aus der EP 3 771 225 A1 und der EP 4 387 272 A1 sind beispielsweise Ladegeräte für ein Hörgerät bekannt, bei welchen der ladegerätseitige Ladekontaktanschluss einen Permanentmagneten zur Realisierung einer magnetischen Haltekraft im kontaktierten Zustand aufweist.

Beispielsweise weist die hörgeräteseitige Ladeschnittstelle eine magnetisierbare Metallfläche auf, welche durch den ladegerätseitigen Permanentmagneten entsprechend magnetisierbar ist. Dadurch wird das Hörgerät während des Ladevorgangs mittels einer sich zwischen dem ladegerätseitigen Permanentmagneten und der hörgerätseitigen Metallfläche ausbildenden magnetischen Haltekraft an dem Ladegerät gehalten.

Die hörgeräteseitige Metallfläche wird durch das Magnetfeld des Permanentmagneten also zumindest temporär magnetisiert. Mit anderen Worten wird eine induzierte Magnetisierung bewirkt, welche eine passive Anziehung zwischen den Ladeschnittstellen bewirkt. Die resultierende Magnetisierung der Metallfläche ist dabei meist vergleichsweise schwach, weniger stabil und in der Regel ist die Haltekraft derart orientiert, dass die Metallfläche auf kürzestem Wege in Richtung des Permanentmagneten angezogen wird. Dadurch bewirkt die Haltekraft zwar eine magnetische Anziehung zwischen den Ladeschnittstellen, diese führt jedoch in der Regel nicht dazu, dass die Kontakt- und Gegenkontaktelemente für die galvanische Verbindung korrekt zueinander positioniert werden.

Hierbei ist es beispielsweise denkbar, dass mechanische Führungskonturen vorgesehen sind, welche die Ladeschnittstellen bei einer magnetischen Anziehung relativ zueinander ausrichten, und in die gewünschte Kontaktstellung oder Kontaktlage zur Durchführung des Ladevorgangs bringen. Beispielsweise kann die hörgeräteseitige Ladeschnittstelle hierbei mit einer trichterartigen oder kalottenartigen Vertiefung, zum Beispiel in Form einer kugelartigen Mulde, als Führungskontur ausgeführt sein, so dass bei einem Eingriff der ladegerätseitigen Ladeschnittstelle in die Vertiefung eine mechanische Zentrierung der Ladekontakte zueinander erfolgt.

Zusätzlich oder alternativ ist es beispielsweise denkbar, auch bei der hörgeräteseitigen Ladeschnittstelle einen Permanentmagneten (Gegenmagnet) vorzusehen. Die zwei Permanentmagnete der Ladeschnittstellen interagieren als eigenständige Magnetfeldquellen mit jeweils definierten Polen, wobei die Permanentmagnete in dem Hörgerät und dem Ladegerät derart ausgerichtet sind, dass im Kontakt- oder Ladezustand der Nordpol des einen Permanentmagneten dem Südpol des anderen Permanentmagneten zugewandt ist. Bei Annäherung richten sich die Ladeschnittstellen aufgrund der festen Magnetisierung so aus, dass Nord- und Südpol aneinandergrenzen (Anziehung). Diese Selbstausrichtung ist sehr stabil, da beide Magnete eine eigene, konstante Magnetfeldquelle darstellen. Dadurch ist es möglich die Kontaktstellen der Ladeschnittstellen durch die magnetische Selbstausrichtung selbsttätig in eine gewünschte relative Lage zueinander zu bringen, so dass die Notwendigkeit für zusätzliche mechanische Führungskonturen reduziert wird oder vollständig entfallen kann.

In der Regel ist der hörgeräteseitige Permanentmagnet hierbei im Inneren des Hörgerätegehäuses und hinter einem Ladekontakt der Ladeschnittstelle angeordnet. Häufig ist hierbei zwischen Ladekontakt und Permanentmagnet weiterhin eine mit dem Ladekontakt verbundene Leiterplatte angeordnet. Der Ladekontakt und der Permanentmagnet sind somit auf unterschiedlichen Seiten der Leiterplatte angeordnet. Der dadurch bedingte räumliche Abstand muss hierbei von dem magnetischen Fluss des Permanentmagneten überbrückt werden. Dies ist nicht ideal, da dadurch die magnetische Anziehung beziehungsweise die Haltekraft oder Selbstausrichtung nachteilig reduziert wird. Daher sind entsprechend starke Permanentmagneten notwendig, wodurch derartige permanentmagnetischen Ladeschnittstellen kostenintensiv und bauraumintensiv sind.

Der Erfindung liegt die Aufgabe zugrunde, eine besonders geeignete Ladeschnittstelle für ein elektrisches Gerät anzugeben. Insbesondere soll eine magnetische Haltekraft zur Sicherung einer galvanischen Ladeverbindung verbessert werden. Vorzugsweise soll weiterhin eine magnetische Selbstausrichtung der Ladeschnittstelle zu einer Gegenladeschnittstelle ermöglicht werden. Der Erfindung liegt weiterhin die Aufgabe zugrunde, ein besonders geeignetes elektrisches Gerät und ein besonders geeignetes Ladesystem anzugeben.

Hinsichtlich der Ladeschnittstelle wird die Aufgabe mit den Merkmalen des Anspruchs 1 und hinsichtlich des elektrischen Geräts mit den Merkmalen des Anspruchs 10 sowie hinsichtlich des Ladesystems mit den Merkmalen des Anspruchs 11 erfindungsgemäß gelöst. Vorteilhafte Ausgestaltungen und Weiterbildungen sind Gegenstand der abhängigen Ansprüche (Unteransprüche).

Die im Hinblick auf die Ladeschnittstelle angeführten Vorteile und Ausgestaltungen sind sinngemäß auch auf das elektrische Gerät und/oder das Ladesystem übertragbar und umgekehrt.

Die Konjunktion "und/oder" ist hier und im Folgenden derart zu verstehen, dass die mittels dieser Konjunktion verknüpften Merkmale sowohl gemeinsam als auch als Alternativen zueinander ausgebildet sein können.

Die erfindungsgemäße Ladeschnittstelle ist für ein elektrisches Gerät vorgesehen sowie dafür geeignet und eingerichtet. Das elektrische Gerät ist insbesondere ein Hörgerät, vorzugsweise ein Hörhilfegerät, wie beispielsweise ein Hinter-dem-Ohr-Hörgerät (engl.: Behind-The-Ear, BTE).

Die erfindungsgemäße Ladeschnittstelle ist dazu vorgesehen und eingerichtet mit einer Gegenladeschnittstelle eines Ladegeräts galvanisch kontaktiert zu werden, um einen Ladevorgang zum Aufladen eines geräteinternen Energiespeichers (Gerätebatterie) durchzuführen. Die Ladeschnittstelle und Gegenladeschnittstelle weisen somit komplementäre elektrische Kontakte oder Kontaktstellen auf, welche im Zuge eines Ladevorgangs mechanisch aneinander anliegen. Beispielsweise wird eine Gegenladeschnittstelle verwendet, wie sie in den europäischen Anmeldungen EP 3 771 225 A1 oder EP 4 872 272 A1 der Anmelderin beschrieben sind. Deren Offenbarungsgehalt, insbesondere deren Ansprüche (mit zugehörigen Erläuterungen) werden hiermit ausdrücklich mit in die vorliegende Anmeldung mit einbezogen.

Das elektrische Gerät weist ein (Geräte-)Gehäuse mit einem Gehäuseabschnitt auf. Der Gehäuseabschnitt ist hierbei insbesondere ein Abschnitt einer außenseitigen Gehäusewand (Außenwand) des Gehäuses. Der Gehäuseabschnitt weist hierbei eine zentrale erste Durchführöffnung und mindestens eine hierzu radial versetzte zweite Durchführöffnung auf. Die lochartigen Durchführöffnungen sind als Durchtritte oder Durchbrüche des Gehäuseabschnitts ausgeführt, welche ein Gehäuseinneres des Gehäuses mit der Umgebung verbinden.

Unter "axial" oder einer "Axialrichtung" wird hier und im Folgenden insbesondere eine Richtung parallel (koaxial) zu einer Mittenachse der ersten Durchführöffnung, also senkrecht zu den Öffnungsflächen der ersten Durchführöffnung verstanden. Entsprechend wird hier und im Folgenden unter "radial" oder einer "Radialrichtung" insbesondere eine senkrecht (quer) zur Mittenachse der ersten Durchführöffnung orientierte Richtung entlang eines Radius der ersten Durchführöffnung verstanden. Unter "tangential" oder einer "Tangentialrichtung" wird hier und im Folgenden insbesondere eine Richtung entlang des Umfangs der ersten Durchführöffnung (Umfangsrichtung, Azimutalrichtung), also eine Richtung senkrecht zur Axialrichtung und zur Radialrichtung, verstanden.

Zur galvanischen Kontaktierung mit der Gegenladeschnittstelle und zur Energieübertragung während eines Ladevorgangs weist die Ladeschnittstelle ein Kontaktstück und ein Kontaktelement als Ladekontakte (Anschlusskontakte) auf.

Das Kontaktstück ist zur Kontaktierung mit einem ersten Gegenkontakt der Gegenladeschnittstelle ausgeführt. Das Kontaktstück ist in der ersten Durchführöffnung angeordnet. Mit anderen Worten sitzt das Kontaktstück radial formschlüssig in der Durchführöffnung ein.

Unter einem "Formschluss" oder einer "formschlüssigen Verbindung" zwischen wenigstens zwei miteinander verbundenen Teilen wird hier und im Folgenden insbesondere verstanden, dass der Zusammenhalt der miteinander verbundenen Teile zumindest in einer Richtung durch ein unmittelbares Ineinandergreifen von Konturen der Teile selbst oder durch ein mittelbares Ineinandergreifen über ein zusätzliches Verbindungsteil erfolgt. Eine gegenseitige Bewegung in dieser Richtung ist also formbedingt gesperrt.

Das Kontaktelement weist mindestens einen Kontaktfortsatz auf, welcher zur Kontaktierung mit einem zweiten Gegenkontakt der Gegenladeschnittstelle ausgeführt ist. Das Kontaktelement ist erfindungsgemäß weiterhin dazu vorgesehen und eingerichtet eine magnetische Anziehung mit der Gegenladeschnittstelle zu ermöglichen. Der Kontaktfortsatz sitzt in der zweiten Durchführöffnung ein. Mit anderen Worten greift der Kontaktfortsatz zumindest teilweise in die zweite Durchführöffnung ein oder durchgreift diese. Das Kontaktelement, insbesondere der Kontaktfortsatz, ist hierbei aus einem magnetisierbaren Material hergestellt. Dies bedeutet, dass das Kontaktelement oder der Kontaktfortsatz eine bestimmte magnetische Permeabilität aufweist und aus einem ferromagnetischen, ferrimagnetischen oder paramagnetischen Material hergestellt ist.

Die Ladeschnittstelle weist weiterhin ein permanentmagnetisches Magnetelement auf, welches axial fluchtend zu dem zentralen Kontaktstück angeordnet ist. Das Magnetelement ist also als ein Permanent- oder Dauermagnet ausgeführt.

Erfindungsgemäß wird oder ist das Kontaktelement von dem Magnetelement derart magnetisiert, dass der Kontaktfortsatz als Magnetpol zur magnetischen Anziehung der Gegenladeschnittstelle wirkt. Durch das Magnetelement wird also eine im Wesentlichen dauerhafte induzierte Magnetisierung des Kontaktelements, insbesondere des Kontaktfortsatzes, bewirkt, so dass der magnetische Fluss des Magnetelements durch die Kontakt- oder Anlagefläche des Kontaktfortsatzes für den zweiten Gegenkontakt geführt oder fokussiert wird. Somit wirkt die Kontaktfläche für den zweiten Gegenkontakt als eine eigenständige und stabile Magnetfeldquelle. Dadurch ist eine besonders geeignete Ladeschnittstelle für ein elektrisches Gerät realisiert. Insbesondere ist somit eine Magnetfeldquelle direkt an der galvanischen Kontaktstelle der Ladeschnittstelle realisiert, wodurch betriebssichere magnetische Haltekräfte für einen Ladevorgang ermöglicht sind.

Durch die Magnetisierung des Kontaktfortsatzes wird somit geräteseitig ein an dem Gehäuseabschnitt angeordneter Magnetpol realisiert, welcher in einem besonders niedrigen Abstand zu dem zweiten Gegenkontakt positioniert ist. Dies ist insbesondere für Anwendungen mit Gegenladeschnittstellen vorteilhaft, bei welchen die Gegenladeschnittstelle ebenfalls ein permanentmagnetisches Magnetelement (Gegenmagnet) zur magnetischen Anziehung aufweist, da somit aufgrund der Orientierung der Magnetpole eine magnetische Selbstausrichtung zwischen Kontaktfortsatz und zweitem Gegenkontakt ermöglicht ist.

Vorzugsweise weist das Kontaktelement eine Anzahl von Kontaktfortsätzen, also mehrere Kontaktfortsätze, beispielsweise drei Kontaktfortsätze, auf, welche jeweils in einer zugeordneten zweiten Durchführöffnung einsitzen, und welche tangential verteilt um die erste Durchführöffnung angeordnet sind. Durch die magnetische Selbstausrichtung der Kontaktfortsätze zu dem mindestens einen zweiten Gegenkontakt ist somit auch eine magnetische Selbstausrichtung des Kontaktstücks zum ersten Gegenkontakt ermöglicht. Dadurch ist es möglich, dass sich die Ladeschnittstelle bei einer Annäherung an die Gegenladeschnittstelle selbsttätig relativ ausrichtet und betriebssicher mit dieser kontaktiert. Somit können mechanische Führungskonturen, wie beispielsweise eine trichter- oder kalottenartige Vertiefung, an dem Gehäuseabschnitt entfallen, so dass der Gehäuseabschnitt im Bereich der Kontaktstellen ohne eine Gehäusekrümmung/-wölbung ausführbar ist. Mit anderen Worten ist der Gehäuseabschnitt plan oder eben ausführbar, so dass zusätzliche Freiheiten für das Gehäusedesign ermöglicht werden.

In einer vorteilhaften Weiterbildung stehen das Kontaktstück und der Kontaktfortsatz dem Gehäuseabschnitt zumindest teilweise axial empor. Insbesondere weisen das Kontaktstück und der Kontaktfortsatz jeweils einen axialen Überstand nach Gehäuseaußen bezüglich des Gehäuseabschnittes auf. Die Kontaktstellen der Ladeschnittstelle zur Gegenladeschnittstelle, also das Kontaktstück und der mindestens eine Kontaktfortsatz, sind somit von der Gehäuseaußenseite aus zugänglich und können bei Bedarf einfach gereinigt, also von Verschmutzungen (z.B. Cerumen) befreit, werden.

In einer zweckmäßigen Ausführung ist der axiale Überstand des Kontaktstücks im Wesentlichen gleich zu dem axialen Überstand des Kontaktfortsatzes dimensioniert. Mit anderen Worten stehen die Kontaktstellen dem Gehäuseabschnitt in gleicher Weise empor. Insbesondere sind die Kontaktflächen des Kontaktstücks und des Kontaktfortsatzes in einer gemeinsamen Ebene angeordnet. Insbesondere bei einem Gehäuseabschnitt ohne eine zusätzliche mechanische Führungskontur ist somit eine besonders einfache Reinigung der Kontaktstellen ermöglicht.

In einer vorteilhaften Ausbildung weist das Magnetelement einen mechanischen Berührungskontakt mit dem Kontaktelement auf. Das Magnetelement liegt also zumindest abschnittsweise an dem Kontaktelement an. Es besteht also ein direkter oder unmittelbarer Kontakt zwischen dem Magnetelement und dem Kontaktelement. Somit besteht zwischen dem Magnetelement und dem Kontaktelement im Wesentlichen kein lichter Abstand oder Spalt, welcher von dem Magnetfeld zu überbrücken ist. Dadurch wird die Magnetisierung des Kontaktelements durch das Magnetelement verbessert, so dass in der Folge höhere magnetische Haltekräfte mit dem Kontaktfortsatz realisierbar sind. Dies ermöglicht beispielsweise den Einsatz eines Magnetelements mit geringerer Magnetfeldstärke, was Herstellungskosten und nachteilige Wechselwirkungen mit stromführenden Bauteilen vorteilig reduzieren kann.

In einer bevorzugten Ausgestaltung ist das Kontaktelement als ein das Magnetelement umgebendes Ringjoch, also als eine das Magnetelement einfassende oder umgreifende Manschette oder als ein Hohlzylinder (Rohr), ausgebildet. Das Magnetelement sitzt also zumindest abschnittsweise in einer zentralen (Ring-)Öffnung des Ringjochs radial formschlüssig ein, und ist außenumfangsseitig oder tangential von dem Ringjoch begrenzt. Das Ringjoch ist insbesondere als ein Kreisringzylinder ausgeführt, wobei das Magnetelement insbesondere kreiszylinderförmig und möglichst passgenau zu der Ringjochöffnung ausgeführt ist. Das Magnetelement wird hierbei beispielsweise aufgrund der magnetischen Anziehungskräfte durch die induzierte Magnetisierung des umgebenden Ringjochs in Position gehalten oder fixiert. Zusätzlich oder alternativ ist eine Halterung des Magnetelements mittels mechanischer Strukturen und/oder durch eine stoffschlüssige Klebeverbindung möglich.

An einer dem Gehäuseabschnitt zugewandten Stirnseite ist hierbei der mindestens eine Kontaktfortsatz axial emporstehend an das Ringjoch angeformt. Der Kontaktfortsatz ist einstückig, also einteilig oder monolithisch, an die Ringjochstirnseite angeformt. Der Kontaktfortsatz ist hierbei insbesondere als ein der Stirnseite emporstehendes Ringsegment des Ringjochs ausgeführt.

Durch die Anordnung des Magnetelements im Inneren des Ringjochs ist eine zuverlässige und gleichmäßige Magnetisierung des Kontaktelements beziehungsweise des oder jedes Kontaktfortsatzes gewährleistet. Insbesondere ist hierbei eine großflächige und vorzugsweise möglichst bündige Anlagefläche zum Magnetelement entlang der Ringinnenwand der zentralen Öffnung realisiert.

In einer vorteilhaften Weiterbildung weist die Ladeschnittstelle eine gehäuseinterne Leiterplatte (Platine) auf, welche zwischen dem Magnetelement und dem Kontaktstück positioniert ist. Auf einer dem Gehäuseabschnitt zugewandten Unterseite der Leiterplatte ist somit das Kontaktstück, und auf einer gegenüberliegenden Oberseite sind das Magnetelement und vorzugsweise das Kontaktelement angeordnet.

Durch die gestapelte Anordnung ist ein besonders kompakter Aufbau der Ladeschnittstelle im Gehäuseinneren ermöglicht. Durch den reduzierten Bauraumbedarf im Gerätegehäuse werden zusätzliche Freiheiten hinsichtlich des Formfaktors und des Designs des Gerätegehäuses ermöglicht.

Die Leiterplatte ist beispielsweise rand- oder umfangsseitig von dem Kontaktfortsatz umgriffen. Der Kontaktfortsatz ist also an der Leiterplatte vorbeigeführt um in die zweite Durchführöffnung des Gehäuseabschnitts einzugreifen. Alternativ ist es beispielsweise denkbar, dass die Leiterplatte eine axial fluchtend zur zweiten Durchführöffnung angeordnete dritte Durchführöffnung für den Kontaktfortsatz aufweist.

Die Leiterplatte ist mit dem Kontaktstück und dem Kontaktelement elektrisch kontaktiert und verbindet diese mit der Gerätebatterie. Das Kontaktstück und das Kontaktelement, insbesondere das Ringjoch, liegen hierbei vorzugsweise direkt an der Leiterplatte an, und sind mit dieser beispielsweise lötkontaktiert. Vorzugsweise sind das Kontaktstück und/oder das Kontaktelement als oberflächenmontierte Bauelemente (engl.: Surface-Mounted Device, SMD) auf der Leiterplatte montiert oder kontaktiert. Dadurch wird der Bauraumbedarf der Ladeschnittstelle weiter reduziert.

Bei einer axial gestapelten SMD-Ausführung der Ladeschnittstelle ist der axiale Überstand der Ladekontakte (Kontaktstück, Kontaktfortsatz) bezüglich des Gehäuseabschnitts vergleichsweise genau dimensionierbar, da eine einfache Toleranzkontrolle ermöglicht ist, welche im Wesentlichen lediglich im Hinblick auf die Dimensionen des Kontaktelements beziehungsweise des Kontaktfortsatzes und des Gehäuseabschnitts variiert.

In einer bevorzugten Weiterbildung weist der Gehäuseabschnitt eine einstückig angeformte Haltevorrichtung zur axialen und radialen Halterung des Kontaktelements auf. Durch die Halterung des Kontaktelements sind mittelbar auch das Magnetelement, die Leiterplatte, und das Kontaktstück radial und axial relativ zum Gehäuseabschnitt gehalten. Dadurch ist eine definierte Einbaulage der Ladeschnittstelle im Gerätegehäuse realisiert.

In einer denkbaren Ausführung weist die Haltevorrichtung mindestens einen Rasthaken zur axialen Verrastung oder Verklipsung an einem Rand des Kontaktelements auf. Der Rasthaken ist hierbei einstückig und axial emporstehend an einer Innenfläche des Gehäuseabschnitts angeformt. Dadurch wird eine Montage am Gehäuseabschnitt vereinfacht, da keine separaten Halte- oder Montageelemente (z.B. Schrauben) notwendig sind.

Der Rasthaken weist eine im entspannten Zustand axial verlaufende Rastlasche auf, welche freiendseitig mit einer beispielsweise keilförmigen Rastnase versehen ist. Der Rasthaken beziehungsweise die Rastlasche sind radial biegeflexibel ausgeführt, dies bedeutet, dass die Rastlasche entgegen einer Rückstellkraft in Radialrichtung federflexibel auslenkbar ausgeführt ist.

Dadurch ist eine besonders einfache axiale Steckmontage der Ladeschnittstelle im Gehäuse ermöglicht. Hierzu werden das Magnetelement, das Kontaktelement, die Leiterplatte und das Kontaktstück als (vormontierte) Baugruppe axial in Richtung des Gehäuseabschnitts bewegt, so dass der Rasthaken in Kontakt mit dem Freiende des Kontaktfortsatzes tritt. Dabei gleitet die Rastnase an einem Rand oder einer Kante des Kontaktfortsatzes entlang, und wird somit radial bewegt oder ausgelenkt. Dadurch wird die Rastlasche mechanisch gespannt, wodurch die Rastnase aufgrund der resultierenden Rückstellkraft radial nach innen zurückbewegt wird, sobald die Rastnase an dem Rand oder an der Kante des Kontaktelements vollständig vorbeibewegt ist. In der Folge hintergreift die Rastnase den Rand oder die Kante des Kontaktelements, so dass der Rasthaken axial form- und/oder kraftschlüssig mit dem Rand des Kontaktelements als Gegenkontur verrastet oder verklipst.

Unter einem "Kraftschluss" oder einer "kraftschlüssigen Verbindung" zwischen wenigstens zwei miteinander verbundenen Teilen wird hier und im Folgenden insbesondere verstanden, dass die miteinander verbundenen Teile aufgrund einer zwischen ihnen wirkenden Reibkraft gegen ein Abgleiten aneinander gehindert sind. Fehlt eine diese Reibkraft hervorrufende "Verbindungskraft" (dies bedeutet diejenige Kraft, welche die Teile gegeneinanderdrückt, beispielsweise eine Schraubenkraft oder die Gewichtskraft selbst), kann die kraftschlüssige Verbindung nicht aufrechterhalten und somit gelöst werden.

Ein radialer Formschluss der Haltevorrichtung für das Kontaktelement ergibt sich insbesondere durch eine Anzahl von tangential verteilt angeordneten Rasthaken. Vorzugsweise weist die Haltevorrichtung eine der Anzahl der Kontaktfortsätze entsprechende Anzahl von Rasthaken auf.

In einer zweckmäßigen Ausgestaltung ist der Rasthaken an einem Rand der zweiten Durchführöffnung angeformt, der Rasthaken grenzt also tangential außenseitig an den Rand der zweiten Durchführöffnung an. Mit anderen Worten ist der Rasthaken, insbesondere die Rastlasche axial fluchtend mit dem Rand der zweiten Durchführöffnung ausgerichtet. Die Rastnase übergreift hierbei die Durchführöffnung in radialer Richtung. Dadurch gibt es zwischen dem Rasthaken und der zweiten Durchtrittsöffnung keinen Hinterschnitt am Gehäuseabschnitt. Dadurch ist eine besonders einfache Entformung des Gehäuseabschnitts im Zuge einer Spritzgussherstellung möglich. Insbesondere ist somit ein konstruktiv besonders einfaches Spritzgusswerkzeug ermöglicht.

In einer vorteilhaften Weiterbildung weist die Ladeschnittstelle ein Dichtelement zur gehäuseinnenseitigen Abdichtung der ersten Durchführöffnung und der zweiten Durchführöffnung(en) auf. Dabei ist das Dichtelement insbesondere zwischen der Innenfläche des Gehäuseabschnitts und der Leiterplatte positioniert. Somit wird insbesondere ein Eintritt von Verschmutzungen (z.B. Cerumen) in das Gehäuse verhindert. Zusätzlich oder alternativ ist das Dichtelement dazu vorgesehen und eingerichtet einen Durchtritt von flüssigen und/oder gasförmigen Substanzen in das Gehäuse zu verhindern.

Das Dichtelement ist beispielsweise axial elastisch komprimierbar, und ist in der Montageposition zumindest teilweise axial komprimiert. Dadurch bewirkt das Dichtelement in der Montageposition eine axiale Rückstellkraft, welche die Baugruppe (Leiterplatte, Kontaktstück, Magnetelement, Kontaktelement) von der Innenseite des Gehäuseabschnitts wegdrückt, so dass der axialen Formschluss des Kontaktelements an den Rasthaken der Haltevorrichtung mittels einer Zugspannung gesichert ist. Durch das komprimierbare Dichtelement ist somit eine axial kraftschlüssige Fixierung des formschlüssigen Hintergriffs des Kontaktelements realisiert. Dadurch ist eine besonders stabile Montageposition der Ladeschnittstelle ermöglicht, so dass die Montage weiter vereinfacht wird.

Das erfindungsgemäße elektrische Gerät ist insbesondere als ein Hörgerät, vorzugsweise als ein Hörhilfegerät ausgeführt. Das elektrische Gerät weist ein Gerätegehäuse mit einem Gehäuseabschnitt auf. An dem Gehäuseabschnitt ist eine vorstehend beschriebene Ladeschnittstelle angeordnet. Dadurch ist ein besonders geeignetes elektrisches Gerät realisiert. Insbesondere ist somit ein elektrisches Gerät realisiert, bei welchem eine erhöhte magnetische Haltekraft für die Sicherung der galvanischen Ladeverbindung während eines Ladevorgangs ermöglicht ist.

Das erfindungsgemäße Ladesystem weist ein vorstehend beschriebenes elektrisches Gerät und ein Ladegerät zur Aufladung einer Gerätebatterie des elektrischen Geräts auf. Das Ladegerät weist hierbei eine Gegenladeschnittstelle zur elektrischen, galvanischen, Kontaktierung mit der Ladeschnittstelle auf. Die Gegenladeschnittstelle weist hierbei einen ersten Gegenkontakt zur elektrischen Kontaktierung des Kontaktstücks und einen zweiten Gegenkontakt zur Kontaktierung des Kontaktfortsatzes des Kontaktelements auf. Das Ladegerät weist weiterhin ein permanentmagnetisches Magnetelement auf, welches ein Magnetfeld in Richtung des zweiten Gegenkontakts bewirkt.

Durch den magnetisierten Kontaktfortsatz und das in Richtung des zweiten Gegenkontakts orientierte Magnetfeld ist effektiv eine magnetische Wechselwirkung zwischen zwei Magnetpolen realisiert, welche sowohl eine verbesserte magnetische Haltekraft als auch eine magnetische Selbstausrichtung zwischen den galvanischen Schnittstellen ermöglicht. Dadurch ist ein besonders geeignetes Ladesystem realisiert.

Die Erfindung wird im Folgenden anhand einer Zeichnung näher erläutert. Darin zeigen:
- Fig. 1: in schematischer Darstellung ein Ladesystem mit einem elektrischen Gerät in Form eines Hörgeräts und mit einem Ladegerät,
- Fig. 2: in perspektivischer Darstellung das elektrische Gerät mit Blick auf eine Ladeschnittstelle,
- Fig. 3: in perspektivischer Darstellung die Ladeschnittstelle mit Blick auf eine Außenseite,
- Fig. 4: in perspektivischer Darstellung die Ladeschnittstellemit Blick auf eine Innenseite,
- Fig. 5: in perspektivischer Darstellung die Ladeschnittstelle in einem auseinandergenommenen Zustand,
- Fig. 6: in Schnittdarstellung die Ladeschnittstelle gemäß der Schnittlinie VI-VI in Fig. 3,
- Fig. 7: in Schnittdarstellung die Ladeschnittstelle gemäß der Schnittlinie VI-VI in Fig. 3 mit einem Magnetfeldverlauf.

Einander entsprechende Teile und Größen sind in allen Figuren stets mit den gleichen Bezugszeichen versehen.

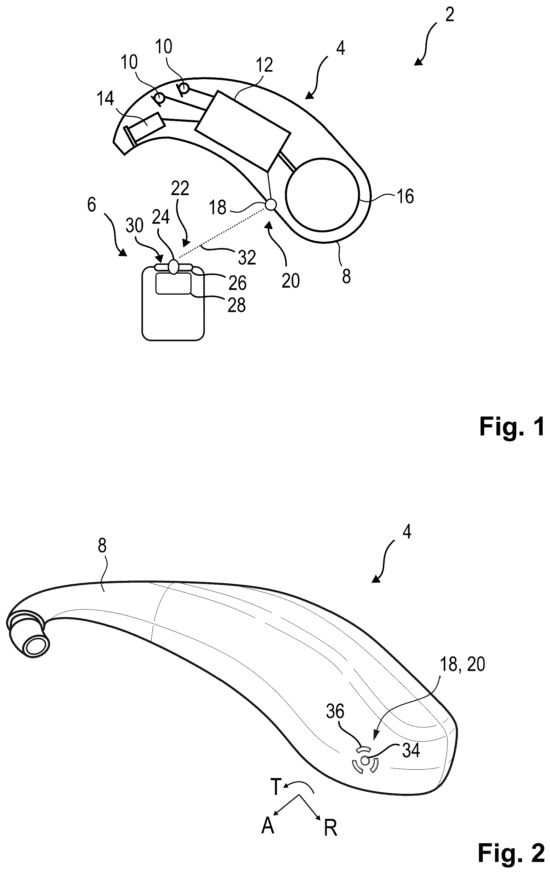

Die Fig. 1 zeigt in schematischer und vereinfachter Darstellung ein Ladesystem 2 mit einem elektrischen Gerät 4 und mit einem Ladegerät 6.

Das elektrische Gerät 4 ist in dem dargestellten Ausführungsbeispiel als ein Hörgerät, insbesondere als ein Hinter-dem-Ohr-Hörgerät (HdO, BTE), ausgebildet. Das Gerät 4 kann alternativ beispielsweise auch als ein In-dem-Ohr-Hörgerät (IdO, ITE), insbesondere als Instant Fit oder mit individueller (Gehäuse-)Schale, ausgeführt sein.

Das Gerät 4 umfasst, wie in der Fig. 1 schematisch dargestellt, ein (Hör-)Gerätegehäuse (Gehäuseschale) 8, in welches mehrere Mikrofone, auch als (akustoelektrische) Eingangswandler 10 bezeichnet, eingebaut sind. Das Gerät 4 weist in diesem Ausführungsbeispiel beispielsweise zwei Eingangswandler 10 auf.

Mit den Eingangswandlern 10 wird ein (Luft-)Schall beziehungsweise die akustischen Signale in einer Umgebung des Geräts 4 aufgenommen, und in elektrische, insbesondere mehrkanalige, Eingangssignale gewandelt. Eine Signalverarbeitungseinheit 12, die ebenfalls in das Gerätegehäuse 8 integriert ist, verarbeitet die Eingangssignale und erzeugt ein Ausgangssignal für einen, insbesondere elektroakustischen, Ausgangswandler 14, welcher beispielsweise als ein Lautsprecher oder Hörer ausgeführt ist, und welcher ein akustisches Signal ausgibt. Bei dem Gerät 4 wird das akustische Signal gegebenenfalls über einen hier nicht näher dargestellten Schallschlauch oder externen Hörer, der mit einer im Gehörgang einsitzenden Otoplastik, zum Trommelfell eines Hörsystemnutzers übertragen. Es ist aber auch beispielsweise ein elektro-mechanischer Ausgangswandler als Hörer denkbar, wie beispielsweise bei einem Knochenleitungshörer.

Die Energieversorgung des Geräts 4 und insbesondere die der Signalverarbeitungseinheit 12 erfolgt durch eine in das Gerätegehäuse 8 integrierte, wiederaufladbare, Gerätebatterie 16. Um die Gerätebatterie 16 mit elektrischer Energie aufzuladen weist das Gerät 4 weiterhin eine Ladeschnittstelle 18 als Ladeanschluss auf. Die Ladeschnittstelle 18 ist an einem Gehäuseabschnitt 20 des Gerätegehäuses 8 positioniert. Eine der Ladeschnittstelle 18 zugeordnete Ladeelektronik zur Durchführung eines Ladevorgangs ist beispielsweise in die Signalverarbeitungseinheit 12 integriert.

Das Ladegerät 6 weist eine Gegenladeschnittstelle 22 zur galvanischen Kontaktierung mit der Ladeschnittstelle 18 auf. Die Gegenladeschnittstelle 22 weist einen ersten Gegenkontakt 24, einen zweiten Gegenkontakt 26 und ein permanentmagnetisches Magnetelement 28 auf, welches ein Magnetfeld in Richtung des Gegenkontakts 26 bewirkt.

Die Gegenkontakte 24, 26 sind konzentrisch zueinander angeordnet. Der zentral positionierte Gegenkontakt 24 ist hierbei beispielsweise als ein Kontaktstift ausgeführt, insbesondere als ein Federkontaktstift oder Pogo Pin, wobei der insbesondere ringförmige Gegenkontakt 26 den Gegenkontakt 24 umfangsseitig einfasst. Der Gegenkontakt 26 weist eine stirnseitige, ringförmige, Kontaktfläche 30 auf.

Die galvanische Kontaktierung zwischen der Ladeschnittstelle 18 und der Gegenladeschnittstelle 22 während eines Ladevorgangs der Gerätebatterie 16, bei welchem elektrische Energie von dem Ladegerät 6 in das Gerät 4 beziehungsweise in die Gerätebatterie 16 eingespeist wird, ist in der Fig. 1 schematisch mit einer Linie 32 dargestellt.

Die Fig. 2 zeigt das elektrische Gerät 4 in einer perspektivischen Ansicht mit Blick auf den Gehäuseabschnitt 20 und die dort angeordnete Ladeschnittstelle 18.

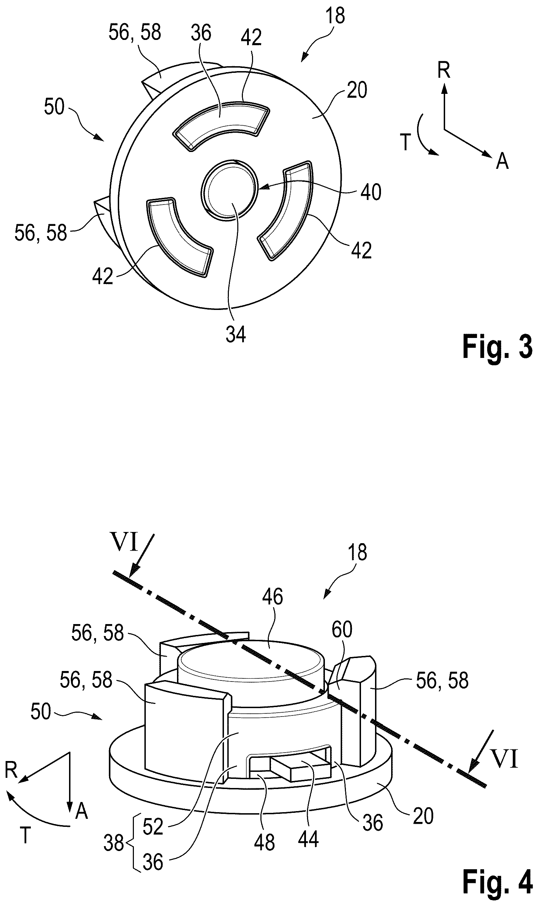

Wie insbesondere in Fig. 3 ersichtlich, weist die Ladeschnittstelle 18 an einer Außenseite des Gehäuseabschnitts 20 vier emporstehende Kontaktflächen für die Gegenkontakte 24, 26 auf. Eine zentrale kreisförmige Kontaktfläche ist hierbei von drei sektorartigen Kontaktflächen umgeben. Die sektorartigen Kontaktflächen sind in einem 120°-Winkel zueinander versetzt um die kreisförmige Kontaktfläche angeordnet. Jede sektorartige Kontaktfläche entspricht im Wesentlichen einem Kreissegment eines größeren gedachten Kreises.

Die zentrale, kreisförmige, Kontaktfläche der Ladeschnittstelle 18 ist durch ein kreiszylindrisches Kontaktstück 34 gebildet, wobei die sektorartigen Kontaktflächen durch drei Kontaktfortsätze 36 eines Kontaktelements 38 (Fig. 4) gebildet werden. Beispielhaft ist in den Figuren lediglich ein Kontaktfortsatz 36 mit Bezugszeichen versehen.

Das Kontaktstück 34 und die Kontaktfortsätze 36 durchgreifen hierbei jeweils eine Durchführöffnung 40, 42, welche in den Gehäuseabschnitt 20 eingebracht sind. Das Kontaktstück 34 sitzt hierbei in der zentralen Durchführöffnung 40 ein, wobei die Kontaktfortsätze 36 in jeweils einer Durchführöffnung 42 einsitzen.

Im Nachfolgenden sind Angaben hinsichtlich der Raumrichtungen insbesondere in einem Koordinatensystem der Ladeschnittstelle 18 angegeben. Unter "axial" oder einer "Axialrichtung A" wird hier und im Folgenden insbesondere eine Richtung parallel (koaxial) zu einer Mittenachse der Durchführöffnung 40, also senkrecht zu den Öffnungsflächen der Durchführöffnung 40, verstanden. Entsprechend wird hier und im Folgenden unter "radial" oder einer "Radialrichtung R" insbesondere eine senkrecht (quer) zur Mittenachse der Durchführöffnung 40 orientierte Richtung entlang eines Radius der Durchführöffnung 40 verstanden. Unter "tangential" oder einer "Tangentialrichtung T" wird hier und im Folgenden insbesondere eine Richtung entlang des Umfangs der Durchführöffnung 40 (Umfangsrichtung, Azimutalrichtung), also eine Richtung senkrecht zur Axialrichtung A und zur Radialrichtung R, verstanden.

Nachfolgend ist der Aufbau der Ladeschnittstelle 18 anhand der Figuren 4 bis 7 näher erläutert.

Die Ladeschnittstelle 18 weist zusätzlich zu dem Kontaktstück 34 und dem Kontaktelement 38 eine Leiterplatte 44, ein permanentmagnetisches Magnetelement 46, ein Dichtelement 48 und eine Haltevorrichtung 50 auf.

Das Magnetelement 46 ist in der dargestellten Ausführungsform insbesondere kreiszylindrisch ausgeführt.

Das Kontaktelement 38 weist ein hohlzylindrisches oder manschettenartiges Ringjoch 52 mit einer zentralen Ringöffnung auf, in welche das Magnetelement 46 im Montagezustand eingesetzt ist. An einer dem Gehäuseabschnitt 20 zugewandten Stirnseite des Ringjochs 52 sind die Kontaktfortsätze 36 axial emporstehend angeformt. Insbesondere sind die Kontaktfortsätze 36 hierbei einstückig, also einteilig oder monolithisch, an das Ringjoch 52 angeformt. Die Kontaktfortsätze 36 sind somit als ein der Stirnseite emporstehendes Ringsegment des Ringjochs 52 ausgeführt.

Das Magnetelement 46 ist im Montagezustand von dem Ringjoch 52 radial formschlüssig eingefasst. Insbesondere liegt das Magnetelement 46 am Innenumfang der Ringöffnung mit einem mechanischen Berührungskontakt an.

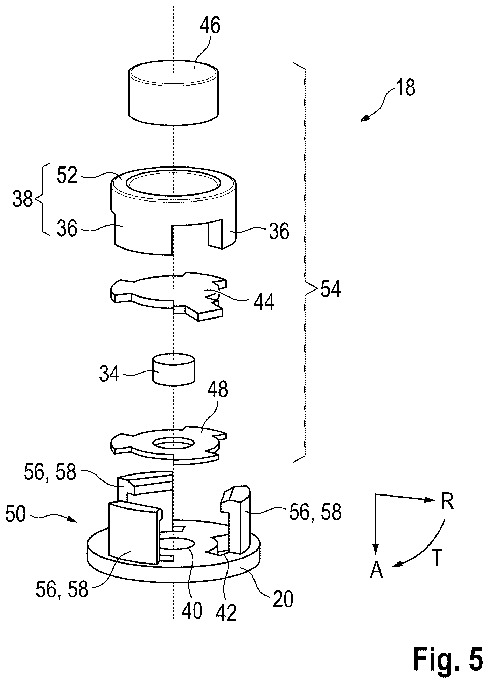

Das Kontaktstück 34, das Kontaktelement 38, die Leiterplatte 44, das Magnetelement 46 und das Dichtelement 48 sind im Montagezustand als eine Baugruppe 54 zumindest teilweise axial übereinandergestapelt angeordnet. Wie in der Darstellung der Fig. 5 vergleichsweise deutlich ersichtlich ist, ist das Magnetelement 46 axial fluchtend zu dem Kontaktstück 34 positioniert. Insbesondere sind die Mittenachsen des Magnetelements 46 und des Kontaktstücks 34 koaxial zueinander ausgerichtet.

Die Leiterplatte 44 ist bei der Baugruppe 54 zwischen dem Kontaktelement 38 und dem Kontaktstück 34 positioniert. Hierbei ist auf einer dem Gehäuseabschnitt 20 zugewandten Unterseite der Leiterplatte 44 das Kontaktstück 34, und auf einer gegenüberliegenden Oberseite das Magnetelement 46 und das Kontaktelement 38, angeordnet. Das Kontaktstück 34 und das Kontaktelement 38 sind als oberflächenmontierte Bauelemente (engl.: Surface-Mounted Device, SMD) auf der Leiterplatte 44 montiert. Die Leiterplatte 44 ist somit elektrisch mit dem Kontaktstück 34 und dem Kontaktelement 38 elektrisch kontaktiert und verbindet diese mit der Ladeelektronik. Beispielsweise ist die Leiterplatte 44 hierbei zumindest abschnittsweise Teil der Signalverarbeitungseinheit 12.

Die Leiterplatte 44 ist beispielsweise rand- oder umfangsseitig von den drei Kontaktfortsätzen 36 umgriffen. Mit anderen Worten sind die axial verlaufenden Kontaktfortsätze 36 an der Leiterplatte 44 vorbeigeführt, so dass diese freiendseitig in die Durchführöffnungen 42 des Gehäuseabschnitts 20 eingreifen. Die Leiterplatte 44 weist in dieser Ausführung beispielsweise nicht näher bezeichnete randseitige, etwa nutenartige, Aussparungen auf, in welchen die Kontaktfortsätze 36 geführt sind. In einer nicht gezeigten Alternativausführung weist die Leiterplatte 44 drei Durchführöffnungen auf, welche axial fluchtend zu den Durchführöffnungen 42 angeordnet sind, und welche von den Kontaktfortsätzen 36 durchgriffen sind.

Das scheibenartige Dichtelement 48 ist im Montagezustand zwischen der Leiterplatte 44 und dem Gehäuseabschnitt 20 positioniert. Das Dichtelement 48 ist zur gehäuseinnenseitigen Abdichtung der Durchführöffnungen 40, 42 vorgesehen sowie dafür geeignet und eingerichtet. Das Dichtelement 48 weist hierbei eine zentrale, lochartige, Aussparung für das Kontaktstück 34 auf. Weiterhin weist das Dichtelement 48 beispielsweise nutenartige Aussparungen für die Kontaktfortsätze 36 auf.

Die Haltevorrichtung 50 ist einstückig an den Gehäuseabschnitt 20 angeformt, und ist dazu vorgesehen und eingerichtet die Baugruppe 54 in einer Einbaulage an den Gehäuseabschnitt 20 zu fixieren.

Die Haltevorrichtung 50 weist drei der Gehäuseinnenseite des Gehäuseabschnitts 20 axial emporstehend angeformte Rasthaken 56 auf, welche mit der Baugruppe 54, insbesondere mit dem Kontaktelement 38 axial formschlüssig verrasten oder verklipsen. Durch die Halterung des Kontaktelements 38 sind mittelbar auch die restliche Baugruppe 54, also das Magnetelement 46, die Leiterplatte 44, das Kontaktstück 34, und das Dichtelement 48 relativ zu dem Gehäuseabschnitt 20 fixiert.

Die Rasthaken 56 weisen jeweils eine axial verlaufende und radial biegeflexible Rastlasche 58 auf. Die Rastlaschen 58 weisen jeweils freiendseitig eine radial nach innen gerichtete Rastnase 60 auf. Die Rastlaschen 58 sind jeweils an einem Rand einer der Durchführöffnungen 42 angeformt. Insbesondere sind die Rastlaschen 58 jeweils axial fluchtend mit dem Rand der jeweils zugeordneten Durchführöffnung 42 ausgerichtet. Die keilförmigen Rastnasen 60 sind hierbei derart an den Rastlaschen 58 angeformt, dass sie die zugeordneten Durchführöffnungen 42 radial übergreifen.

Zur Montage der Ladeschnittstelle 18 wird die Baugruppe 54 von Gehäuseinnen axial in Richtung des Gehäuseabschnitts 20 bewegt, so dass die Rasthaken 56 in Kontakt mit den Freienden der Kontaktfortsätze 36 tritt. Dabei gleiten die jeweiligen Rastnasen 60 an den Kontaktfortsätzen 36 entlang, so dass die Rasthaken 56 beziehungsweise die Rastlaschen 58 radial nach außen bewegt oder ausgelenkt werden. Dadurch werden die Rastlaschen 58 mechanisch gespannt. Sobald die Rastnasen 60 an dem stirnseitigen Rand oder an der stirnseitigen Kante des Kontaktelements 38 vollständig vorbeibewegt sind werden die Rasthaken 56, und somit die Rastnasen 60, aufgrund der resultierenden Rückstellkraft radial nach innen zurückbewegt. Dadurch hintergreifen die Rastnasen 60 die dem Gehäuseabschnitt 20 abgewandte Stirnseite des Kontaktelements 38, so dass die Baugruppe 54 axial am Gehäuseabschnitt 20 fixiert wird. Aufgrund des tangentialen Verteilungsmaßes der Rasthaken 56 ist im verrasteten oder verklipsten Zustand weiterhin eine radiale Fixierung der Baugruppe 54 durch die Haltevorrichtung 50 realisiert.

Das Dichtelement 48 ist axial elastisch komprimierbar, und ist im verrasteten Zustand der Baugruppe 54 zumindest teilweise axial komprimiert. Dadurch bewirkt das Dichtelement 48 eine axiale Rückstellkraft, welche die Baugruppe 54 von der Innenseite des Gehäuseabschnitts 20 wegdrückt, so dass der axiale Formschluss des Kontaktelements 38 an den Rasthaken 56 der Haltevorrichtung 50 mittels einer Zugspannung gesichert ist.

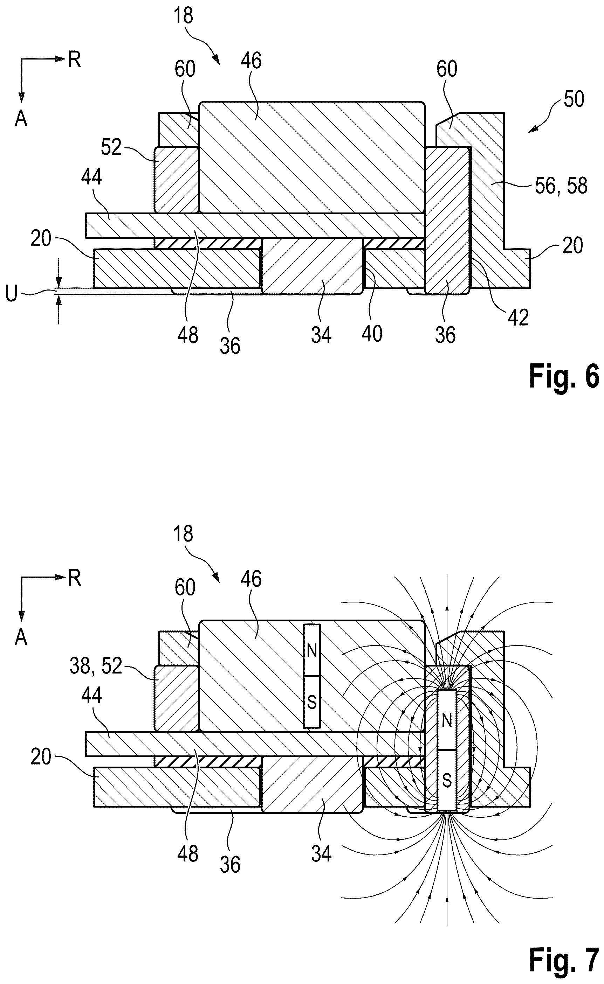

Die Fig. 6 zeigt die Ladeschnittstelle 18 in einer Schnittdarstellung entlang der Schnittlinie VI-VI gemäß Fig. 3. Wie in der Schnittansicht vergleichsweise deutlich ersichtlich ist, stehen das Kontaktstück 34 und die Kontaktfortsätze 36 der Gehäuseaußenseite des Gehäuseabschnitts 20 entlang der Axialrichtung A mit einem axialen Überstand U empor. Der axialer Überstand U des Kontaktstücks 34 ist dabei im Wesentlichen gleich zu den axialen Überständen U der Kontaktfortsätze 36 dimensioniert. Alle Kontaktflächen des Kontaktstücks 34 und der Kontaktfortsätze 36 sind somit in einer gemeinsamen (Kontakt-)Ebene angeordnet.

Das Kontaktelement 38, also das Ringjoch 52 und die Kontaktfortsätze 36, ist aus einem magnetisierbaren Material hergestellt. Das Magnetelement 46 magnetisiert somit das umgebende Ringjoch 52, so dass das Magnetelement 46 aufgrund der dadurch resultierenden magnetischen Anziehungskraft in dem Ringjoch 52 fixiert ist. In der Folge werden die Kontaktfortsätze 36 in Axialrichtung A magnetisiert. Dies ist schematisch in der Darstellung der Fig. 7 gezeigt. Hierbei ist die Magnetisierung des Magnetelements 46 und des gezeigten Kontaktfortsatzes 36 mit Stabmagneten schematisch dargestellt. Die Fig. 7 zeigt weiterhin den Verlauf der Magnetfeldlinien für den magnetisierten Kontaktfortsatz 36.

Die Kontaktfortsätze 36 sind von dem Magnetelement 46 somit derart magnetisiert, dass die stirnseitigen, und dem Gehäuseabschnitt 20 axial emporstehenden, Kontaktflächen der Kontaktfortsätze 36 jeweils als Magnetpol zur magnetischen Anziehung der Gegenladeschnittstelle 22 wirken. Somit werden drei Magnetfeldquellen direkt an der galvanischen Kontaktstelle der Ladeschnittstelle 18 realisiert, wodurch betriebssichere magnetische Haltekräfte für einen Ladevorgang ermöglicht sind. Dadurch ist es möglich, die Ladeschnittstelle 18 beziehungsweise den Gehäuseabschnitt 20 ohne eine mechanische Führungskontur auszuführen, wie beispielsweise in den Darstellungen der Fig. 2 und Fig. 3 ersichtlich ist.

Weiterhin ermöglichen die magnetisierten Kontaktfortsätze 36 im Zusammenwirken mit dem Magnetelement 28 der Gegenladeschnittstelle 22 aufgrund der Orientierung der Magnetpole eine magnetische Selbstausrichtung zwischen den Kontaktfortsätzen 36 und dem Magnetelement 28. Da das Magnetelement 28 derart ausgeführt ist, dass dessen Magnetfeld in Richtung des Gegenkontakts 26 ausgerichtet ist, erfolgt somit eine Selbstausrichtung, bei welcher die Kontaktflächen der Kontaktfortsätze 36 in Berührungskontakt mit der Kontaktfläche 30 des Gegenkontakts 26 gebracht werden. Aufgrund der zentrierten Anordnungen des Kontaktstücks 34 und des Gegenkontakts 24 werden diese bei der Selbstausrichtung ebenfalls miteinander kontaktiert.

Dadurch ist ein Ladesystem 2 mit einer magnetischen Selbstausrichtung und magnetischen Fixierung der galvanischen Kontaktierung realisiert.

Die beanspruchte Erfindung ist nicht auf das vorstehend beschriebene Ausführungsbeispiel beschränkt. Vielmehr können auch andere Varianten der Erfindung von der Fachperson hieraus im Rahmen der offenbarten Ansprüche abgeleitet werden, ohne den Gegenstand der beanspruchten Erfindung zu verlassen. Insbesondere sind ferner alle im Zusammenhang mit dem Ausführungsbeispiel beschriebenen Einzelmerkmale im Rahmen der offenbarten Ansprüche auch auf andere Weise kombinierbar, ohne den Gegenstand der beanspruchten Erfindung zu verlassen.

### Bezugszeichenliste

- 2: Ladesystem
- 4: Gerät
- 6: Ladegerät
- 8: Gerätegehäuse
- 10: Eingangswandler
- 12: Signalverarbeitungseinheit
- 14: Ausgangswandler
- 16: Gerätebatterie
- 18: Ladeschnittstelle
- 20: Gehäuseabschnitt
- 22: Gegenladeschnittstelle
- 24: Gegenkontakt
- 26: Gegenkontakt
- 28: Magnetelement
- 30: Kontaktfläche
- 32: Linie
- 34: Kontaktstück
- 36: Kontaktfortsatz
- 38: Kontaktelement
- 40: Durchführöffnung
- 42: Durchführöffnung
- 44: Leiterplatte
- 46: Magnetelement
- 48: Dichtelement
- 50: Haltevorrichtung
- 52: Ringjoch
- 54: Baugruppe
- 56: Rasthaken
- 58: Rastlasche
- 60: Rastnase
- A: Axialrichtung
- R: Radialrichtung
- T: Tangentialrichtung
- U: Überstand

## Patentansprüche

1. Ladeschnittstelle (18) für ein elektrisches Gerät (4), insbesondere für ein Hörgerät, aufweisend
- einen Gehäuseabschnitt (20) mit einer zentralen ersten Durchführöffnung (40) und mit mindestens einer hierzu radial versetzten zweiten Durchführöffnung (42),
- ein Kontaktstück (34) zur Kontaktierung eines ersten Gegenkontakts (24) einer Gegenladeschnittstelle (22), welches in der ersten Durchführöffnung (40) einsitzt,
- ein Kontaktelement (38) mit mindestens einem Kontaktfortsatz (36) zur Kontaktierung eines zweiten Gegenkontakts (26) der Gegenladeschnittstelle (22), welcher in der zweiten Durchführöffnung (42) einsitzt,
- ein permanentmagnetisches Magnetelement (46), welches axial fluchtend zu dem zentralen Kontaktstück (34) angeordnet ist,
- wobei das Kontaktelement (38) aus einem magnetisierbaren Material hergestellt ist, und von dem Magnetelement (46) derart magnetisiert ist, dass der Kontaktfortsatz (36) als Magnetpol zur magnetischen Anziehung der Gegenladeschnittstelle (22) wirkt.

2. Ladeschnittstelle (18) nach Anspruch 1,
**dadurch gekennzeichnet,**
**dass** das Kontaktstück (34) und der Kontaktfortsatz (36) dem Gehäuseabschnitt (20) zumindest teilweise axial emporstehen.

3. Ladeschnittstelle (18) nach Anspruch 1 oder 2,
**dadurch gekennzeichnet,**
**dass** das Kontaktelement (38) und das Magnetelement (46) sich mechanisch berühren.

4. Ladeschnittstelle (18) nach einem der Ansprüche 1 bis 3,
**dadurch gekennzeichnet,**
**dass** das Kontaktelement (38) als ein das Magnetelement (46) umgebendes Ringjoch (52) ausgeführt ist, an welchem stirnseitig der mindestens eine Kontaktfortsatz (36) axial emporstehend einstückig angeformt ist.

5. Ladeschnittstelle (18) nach einem der Ansprüche 1 bis 4,
**dadurch gekennzeichnet,**
**dass** eine Leiterplatte (44) zwischen dem Magnetelement (46) und dem Kontaktstück (34) angeordnet ist.

6. Ladeschnittstelle (18) nach einem der Ansprüche 1 bis 5,
**dadurch gekennzeichnet,**
**dass** der Gehäuseabschnitt (20) eine einstückig angeformte Haltevorrichtung (50) zur axialen und radialen Halterung des Kontaktelements (38) aufweist.

7. Ladeschnittstelle (18) nach Anspruch 6,
**dadurch gekennzeichnet,**
**dass** die Haltevorrichtung (50) mindestens einen emporstehenden Rasthaken (56) zur axialen Verrastung an einem Rand des Kontaktelements (38) aufweist.

8. Ladeschnittstelle (18) nach Anspruch 7,
**dadurch gekennzeichnet,**
**dass** der Rasthaken (56) an einem Rand der zweiten Durchführöffnung (42) angeformt ist.

9. Ladeschnittstelle (18) nach einem der Ansprüche 1 bis 8,
**dadurch gekennzeichnet,**
**dass** ein Dichtelement (48) zur gehäuseinnenseitigen Abdichtung der ersten und zweiten Durchführöffnungen (40, 42) vorgesehen ist.

10. Elektrisches Gerät (4), insbesondere Hörgerät, aufweisend ein Gerätegehäuse (8) mit einem Gehäuseabschnitt (20) und einer am Gehäuseabschnitt (20) angeordneten Ladeschnittstelle (18) nach einem der Ansprüche 1 bis 9.

11. Ladesystem (2) aufweisend ein elektrisches Gerät (4) nach Anspruch 10 und ein Ladegerät (6) mit einer Gegenladeschnittstelle (22) zur elektrischen Kontaktierung mit der Ladeschnittstelle (18), wobei die Gegenladeschnittstelle (22) einen ersten Gegenkontakt (24) zur Kontaktierung des Kontaktstücks (34), einen zweiten Gegenkontakt (26) zur Kontaktierung mit dem Kontaktfortsatz (36) des Kontaktelements (38), und ein permanentmagnetisches Magnetelement (28) aufweist, welches ein Magnetfeld in Richtung des zweiten Gegenkontakts (26) bewirkt.
